# EUROPEAN PATENT APPLICATION

(11) **EP 4 840 901 A1**
(43) Date of publication of application: **18.11.2026**
(21) Application number: 25175832.2
(22) Date of filing: 12.05.2025
(51) Int. Cl.: C08L 23/06

(54) **A HDPE BLOWN FILM WITH IMPROVED PROPERTIES**

(71) Applicant: Borealis GmbH, 1020 Vienna (AT)
(72) Inventor: WANG, Jingbo, 4021 Linz (AT); NIEDERSUESS, Peter, 4021 Linz (AT); OLRY, Camille, 92400 Courbevoie (FR); ORTNER, Stefan, 4021 Linz (AT)
(74) Representative: Kador & Partner Part mbB

(57) **Abstract**

The present invention concerns a blown film comprising a polyethylene composition comprising a) a high-density polyethylene and b) a polypropylene composition comprising a polymeric nucleating agent showing an advantageous combination of optical properties and mechanical properties. If further concerns with a process for preparing the blown film, a polyethylene composition comprised in the blown film and the use of the blown film for packaging.

## Description

### Field of the invention

The present invention concerns a blown film comprising a polyethylene composition comprising a) a high-density polyethylene and b) a polypropylene composition comprising a polymeric nucleating agent showing an advantageous combination of optical properties and mechanical properties.

### Background

In the context of a circular economy, sustainability is a fundamental requirement in all applications. A common approach to achieving sustainability is the 3R approach, where the 3R stands for Reuse, Reduce, and Recycle. Among these, Reduce plays a particularly crucial role, as it focuses on minimizing the material usage and the weight of plastics.

To meet this goal, it is often necessary to use advanced materials that offer enhanced properties, such as increased stiffness, improved impact resistance, and better optical qualities. One effective method for improving these properties is nucleation, which helps refine the material structure.

In the production of blown film, HDPE is a typical choice due to its favorable combination of properties and processability. However, when it comes to high-density polyethylene (HDPE) in general and for the production of blown film, there are two significant challenges: first, there is a limited availability of efficient nucleating agents for HDPE, especially when compared to polypropylene (PP) due to the high rate of crystallization of the polyethylene; second, nucleation in HDPE often results in a trade-off, where improving certain properties of blown film may lead to a decrease in impact strength.

US patent application US 2015/166775 A1 discloses a blown film composition including a first high density polyethylene component and a second high density polyethylene component, wherein the blown film contains a mixture of three or more discrete molecular weight distributions, and wherein the second high density polyethylene component has at least one more discrete molecular weight distribution than the first high density polyethylene component. US 2015/166775 A1 discloses and exemplifies compositions comprising the nucleating agent HPN-20E (34% Zinc Stearate+66% 1,2-Cyclohexanedicarboxylic Acid, Calcium salt).

Indeed, there is a need to develop blown films comprising HOPE compositions having improved properties such as stiffness and clarity without being affected by a reduced impact resistance.

### Summary of the Invention

The present invention is based on the finding that the needs for blown films containing HDPE can be met through a specific design incorporating a HDPE polyethylene composition that includes a polymeric nucleating agent. Surprisingly, it has been found that this blown film exhibits an optimized balance between optical and mechanical properties, such as clarity and stiffness, without negatively affecting impact resistance (e.g., dart drop impact) due to the presence of the polymeric nucleating agent.

In a first aspect, the present invention is directed to a blown film comprising a polyethylene composition comprising
a) at least 90 wt.-%, based on the total weight of the polyethylene composition, of a high-density polyethylene (HDPE) having
   a.1 a density ranging from 945 kg/m³ to 970 kg/m³
   a.2 MFR₂ ranging from 0.05 to 5.0 g/10min (190°C under a load of 2.16 kg) and
b) from 1 to 10 wt.-%, based on the total weight of the polyethylene composition, of a polypropylene composition comprising
   b.1 up to 99.9999 wt.-%, based on the total weight of the polypropylene composition, of a polypropylene wherein the polypropylene is
      b.1a a polypropylene homopolymer having from 0.0 to 0.2 wt.-%, based on the total weight of the polypropylene homopolymer, of ethylene as comonomer or
      b.1b an heterophasic polypropylene, and
   b.2 a polymeric nucleating agent.

In a second aspect, the present invention is directed to a process for preparing a blown film, the process comprising
i) providing a polyethylene composition as defined in the first aspect and
ii) blown film extruding the composition of i).

In a third aspect, the present invention is directed to the polyethylene composition as defined in the first aspect.

In a fourth aspect, the present invention is directed to the use of the blown film of the first aspect in packaging.

### Detailed description

The blown film according to the invention comprises a polyethylene composition comprising
a) at least 90 wt.-%, based on the total weight of the polyethylene composition, of a high-density polyethylene (HDPE) having
   a.1 a density ranging from 945 kg/m³ to 970 kg/m³
   a.2 MFR₂ ranging from 0.05 to 5.0 g/10min (190°C under a load of 2.16 kg) and
b) from 1 to 10 wt.-%, based on the polyethylene composition, of a polypropylene composition comprising
   b.1 up to 99.9999 wt.-%, based on the total weight of the polypropylene composition, of a polypropylene wherein the polypropylene is
      b.1a a polypropylene homopolymer having from 0.0 to 0.2 wt.-%, based on the total weight of the polypropylene homopolymer of ethylene as comonomer or
      b.1b an heterophasic polypropylene, and
   b.2 a polymeric nucleating agent.

### Polyethylene composition

The polyethylene composition comprises at least 90 wt.-% of a high-density polyethylene (HDPE) as defined herein and from 1 to 10 wt.-% of a polypropylene composition as defined herein, all based on the total weight of the polyethylene composition.

The polyethylene composition preferably comprises HDPE in an amount in a range of from 90 to 99 wt.-%, more preferably of from 93 to 97 wt.-%.

The polyethylene composition comprises the polypropylene composition in an amount in a range of from 1 to 10 wt.-%, preferably of from 3 to 7 wt.-%, more preferably of from 4 to 6 wt.-%.

The polyethylene composition may further comprise additives, for example those that are typically used for the preparation of blown films. The additives may vary in dependence of the final use of the blown film. This aspect is known to the skilled person in the art. Additives in this context are those additives (component c) that are mixed with components a) and b) to form the polyethylene composition. Nucleating agents for crystallization are sometimes regarded as additives. In the context of the present invention, the polymeric nucleating agents are not to be regarded to be encompassed in the "additive(s)" component c). Non polymeric nucleating agents are also not regarded to be encompassed in the "additive(s)" component c).

The polyethylene composition may contain up to 5.0 wt.-% of additives (component c)) such as antioxidants, acid scavengers, UV-stabilizers, lubricants, slip agents and antiblocking agents. Preferably the additive(s) content is below 3.0 wt.-%, like below 1.0 wt.-%. Typically, the additive(s) content is at least 0.1 wt.-%.

Any method that produces the polyethylene composition is suitable according to the invention. Preferably, the polyethylene composition is prepared by compounding HDPE and the polypropylene composition and optionally the additives in an extruder.

### Component a): High-density polyethylene (HDPE)

Component a) of the polyethylene composition of the invention is a high-density polyethylene (HDPE).

The high-density polyethylene (HDPE) may be a homopolymer or a copolymer, preferably the HDPE is an ethylene copolymer. By ethylene copolymer is meant a polymer the majority by weight of which derives from ethylene monomer units (i.e. at least 50 wt.-% ethylene relative to the total weight of the copolymer). The comonomer contribution preferably is up to 10 mol.-%, more preferably up to 5 mol.-%. Ideally however there are very low levels of comonomer present in the polymers of the present invention such as 0.1 to 2.0 mol.-%, e.g. 0.1 to 1.0 mol.-%. The co-polymerizable monomer or monomers are preferably C₃-C₁₂, especially C₃-C₁₀, alpha olefin comonomers, particularly singly or multiply ethylenically unsaturated comonomers, in particular C₃-C₁₀-alpha olefins such as propene, but-1-ene, hex-1-ene, oct-1-ene, and 4-methyl-pent-1-ene. The use of but-1-ene, hex-1-ene, oct-1-ene, or mixtures thereof, is particularly preferred, especially but-1-ene and hex-1-ene. Ideally, there is only one comonomer present.

The HDPE has a density in the range of from 945 kg/m³ to 970 kg/m³, preferably in the range of from 950 kg/m³ to 965 kg/m³, more preferably in the range of from 955 kg/m³ to 960 kg/m³. The density is measured according to the method disclosed herein below in the section "Measuring methods".

The HDPE has an MFR₂ in the range of from 0.05 to 5.0 g/10min, preferably in the range of from 0.3 to 4.0 g/10min, more preferably in the range of from 0.5 to 2.0 g/10min. The MFR₂ is measured according to the method disclosed herein below in the section "Measuring methods".

The HDPE preferably has an MFR₂₁ in the range of from 20 to 100 g/10 min, such as of from 25 to 90 g/ 10 min, more preferably of from 30 to 80 g/10 min, most preferably of from 35 to 60 g/10 min. The MFR₂₁ is measured according to the method disclosed herein below in the section "Measuring methods"

The HDPE has preferably a melt flow rate ratio MFR₂₁/MFR₂ in the range of from 15 to 120, more preferably in the range of from 25 to 100, even more preferably in the range of from 30 to 85, most preferably in the range of from 40 to 75.

The HDPE can be unimodal or multimodal, for example bimodal. The HDPE comprising at least two polyethylene fractions, which have been produced under different polymerization conditions resulting in different (weight average) molecular weights and molecular weight distributions for the fractions, is referred to as "multimodal". Preferably, the HDPE is a bimodal copolymer.

Preferably, the multimodal, preferably bimodal, HDPE comprises
a lower molecular weight (LMW) polyethylene, and
a higher molecular weight (HMW) ethylene copolymer fraction.

The LMW fraction preferably has an MFR₂ in the range of from 10 g/10 min to 1000 g/10min, more preferably of from 50 g/10 min to 800 g/10 min, and most preferably of from 250 g/10 min to 450 g/10 min. The MFR₂ is measured according to the method disclosed herein below in the section "Measuring methods".

The weight average molecular weight Mw of the LMW fraction preferably is of from 10 kD to 90 kD, more preferably is of from 20 kD to 80 kD. The Mw is measured according to the method disclosed herein below in the section "Measuring methods".

Preferably, the LMW fraction is an ethylene homo- or copolymer with a density of at least 965 kg/m³. The density is measured according to the method disclosed herein below in the section "Measuring methods".

Most preferably, the LMW fraction is an ethylene homopolymer. If the LMW fraction is a copolymer, the comonomer is preferably 1 -butene. The comonomer content of the LMW fraction, if it is a copolymer, is preferably very low, such as less than 0.2 mol.-%, preferably less than 0.1 mol.-%, especially less than 0.05 mol.-%. A further preferred option therefore, is for the LMW fraction to be a homopolymer or a copolymer with a very low comonomer content, such as less than 0.2 mol.-%, preferably less than 0.1 mol.-%, especially less than 0.05 mol.-%. The comonomer content is measured according to the method disclosed herein below in the section "Measuring methods".

If the LMW fraction is a homopolymer, the HMW fraction is then preferably a copolymer. Preferably the HMW copolymer fraction comprises at least one C₃-C₁₂ alpha olefin, preferably but-1-ene, hex-1-ene or oct-1-ene as comonomer, more preferably but-1-ene as comonomer.

The HMW fraction preferably has an MFR₂ in the range of from 0.0001 g/10 min to 0.01 g/10 min, more preferably of from 0.001 g/10 min to 0.008 g/10 min, and most preferably of from 0.0015 g/10 min to 0.004 g/10 min. The MFR₂ is measured according to the method disclosed herein below in the section "Measuring methods".

The HMW fraction preferably has an Mw in the range of from 60 kD to 500 kD, more preferably of from 100 kD to 400 kD.

Preferably, the HMW fraction is an ethylene copolymer with a density of less than 965 kg/m³.

The weight ratio of fraction LMW to fraction HMW in the HDPE is in the range of from 30:70 to 70:30, more preferably of from 35:65 to 65:35, most preferably of from 40:60 to 60:40. In some embodiments the ratio may be 35 to 50 wt.-% of fraction LMW and 50 to 65 wt.-% fraction HMW such as 40 to 50 wt.-% of fraction LMW and 50 to 60 wt.-% fraction HMW, most preferably 48 to 50 wt.-% of fraction LMW and 50 to 52 wt.-% fraction HMW, wherein the wt.-% are relative to the total weight of the multimodal HDPE.

Where herein features of LMW and HMW fractions of the bimodal or multimodal HDPE of the present invention are given, these values are generally valid for the cases in which they can be directly measured on the respective fraction, e.g. when the fraction is separately produced or produced in the first stage of a multistage process. However, the bimodal or multimodal HDPE may also be and preferably is produced in a multistage process wherein e.g. LMW and HMW fractions are produced in subsequent stages. In such a case, the properties of the fractions produced in the second step (or further steps) of the multistage process can either be inferred from polymers, which are separately produced in a single stage by applying identical polymerization conditions (e.g. identical temperature, partial pressures of the reactants and diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated as disclosed in the "Measuring methods" section herein below and , e.g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method.

A multimodal (e.g. bimodal) HDPE as hereinbefore described may be produced by mechanical blending two or more polyethylenes (e.g. monomodal polyethylenes) having differently centered maxima in their molecular weight distributions. The monomodal polyethylene required for blending may be available commercially or may be prepared using any conventional procedure known to the skilled man in the art.

Preferably, the multimodal HDPE may be produced by polymerization using conditions which create a multimodal (e.g. bimodal) polymer product, e.g. using a catalyst system or mixture with two or more different catalytic sites, each site obtained from its own catalytic site precursor, or using a two or more stage, i.e. multistage, polymerization process with different process conditions in the different stages or zones (e.g. different temperatures, pressures, polymerization media, hydrogen partial pressures, etc.).

Preferably, the multimodal (e.g. bimodal) HDPE is produced by a multistage ethylene polymerization, e.g. using a series of reactors, with optional comonomer addition preferably in only the reactor(s) used for production of the higher/highest molecular weight components) or differing comonomers used in each stage. A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage which comprises a polymerization catalyst. The polymerization reactions used in each stage may involve conventional ethylene homo-polymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662). Multimodal polymer produced in a multistage process are also designated as "in-situ" blends.

Accordingly, it is preferred that fractions LMW and HMW of the polyethylene composition are produced in different stages of a multistage process. Preferably, the multistage process comprises at least one gas phase stage in which, preferably, fraction HMW is produced. Further preferred, fraction HMW is produced in a subsequent stage in the presence of fraction LMW which has been produced in a previous stage.

The polymerization catalysts include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is silica supported ZN catalyst. The ZN catalyst further preferably comprises a group 4 (group numbering according to new IUPAC system) metal compound, preferably titanium, magnesium dichloride and aluminium. The catalyst may be commercially available or be produced in accordance or analogously to the literature. For the preparation of the preferable catalyst usable in to prepare the HDPE of the invention reference is made to WO2014180989, WO2004055068 and WO2004055069 of Borealis, EP 0 688 794, EP 0 810 235. The content of these documents in its entirety is incorporated herein by reference, in particular concerning the general and all preferred embodiments of the catalysts described therein as well as the methods for the production of the catalysts. Particularly preferred ZN catalysts are described in EP 0 810 235. The resulting end product consists of an intimate mixture of the polymers from the two or more reactors, the different molecular-weight-distribution curves of these polymers together forming a molecular- weight-distribution curve having a broad maximum or two or more maxima, i.e. the end-product is a bimodal or multimodal polymer mixture.

It is preferred that the HDPE according to the invention is a bimodal polyethylene mixture consisting of fractions LMW and HMW. It is also preferred that this bimodal polyethylene mixture has been produced by polymerization as described above under different polymerization conditions in two or more polymerization reactors connected in series. Owing to the flexibility with respect to reaction conditions thus obtained, it is most preferred that the polymerization is carried out in a loop reactor/a gas-phase reactor combination.

Preferably, the polymerization conditions in the preferred two-stage method are so chosen that the comparatively low-molecular polymer (LMW) having no content of comonomer is produced in one stage, preferably the first stage, owing to a high content of chain-transfer agent (hydrogen gas), whereas the high-molecular polymer (HMW) having a content of comonomer is produced in another stage, preferably the second stage. The order of these stages may, however, be reversed.

Preferably in a polymerization in a loop reactor followed by a gas-phase reactor, the polymerization temperature in the loop reactor preferably is in the range of from 85 to 115°C, more preferably is of from 90 to 105°C, and most preferably is of from 92 to 100°C, and the temperature in the gas-phase reactor preferably is in the range of from 70 to 105°C, more preferably is of from 75 to 100°C, and most preferably is of from 82 to 97°C.

A chain-transfer agent, preferably hydrogen, is added as required to the reactors, and preferably 100 to 800 moles of hydrogen per kmole of ethylene are added to the reactor, when the LMW fraction is produced in this reactor, and 50 to 500 moles of hydrogen per kmole of ethylene are added to the gas phase reactor when this reactor is producing the HMW fraction.

Suitable HDPEs and the process for preparing the same are further disclosed in WO2014180989.

### Component b): Polypropylene composition

The polyethylene composition of the invention further comprises a polypropylene composition. The polypropylene composition comprises
b.1 up to 99.9999 wt.-%, based on the total weight of the polypropylene composition, of a polypropylene wherein the polypropylene is
   b.1a a polypropylene homopolymer having of from 0.0 to 0.2 wt.-%, based on the total weight of the polypropylene homopolymer, of ethylene as comonomer or
   b.1b an heterophasic propylene polymer, and
b.2 a polymeric nucleating agent.

The polypropylene composition comprises up to 99.9999 wt.-%, based on the total weight of the polypropylene composition, of the polypropylene. Preferably, the polypropylene composition comprises at least 80 wt.-%, more preferably comprises at least 90 wt.-%, still more preferably comprises at least 95 wt.-%, yet more preferably comprises at least 99.9 wt.-% of the polypropylene. The polypropylene composition comprises preferably comprises of from 80 to 99.9999 wt.-% of the polypropylene, more preferably of from 90 to 99.8 wt.-%, even more preferably of from 95 to 99.5 wt.-%, still more preferably of from 97 to 99.3 wt.-%, most preferably of from 99 to 99.0 wt.-% of the propylene. The wt.-% values are based on the total weight of the polypropylene composition.

The polypropylene composition preferably has a melt flow rate MFR₂ in the range of from 0.1 to 20 g/10 min, preferably in the range of from 1 to 15.0 g/ 10 min, more preferably in the range of from 2 to 7.0 g/10 min. The MFR₂ is measured according to the method disclosed herein below in the section "Measuring methods".

The melting temperature Tm of the polypropylene composition is preferably in the range of from 150°C to 180°C, more preferably in the range of from 155°C to 175°C, and even more preferably in the range of from 160°C to 170°C. The Tm is measured as disclosed in the "Measuring methods" section herein below.

The crystallization temperature Tc of the polypropylene composition is preferably in the range of from 120°C to 140°C, more preferably in the range of from 125°C to 135°C, and even more preferably in the range of from 126°C to 132°C. The Tc is measured as disclosed in the "Measuring methods" section herein below.

The polypropylene composition comprises either component b.1a, a polypropylene homopolymer or component b.1b, a heterophasic propylene polymer, preferably the polypropylene composition comprises b.1a, a polypropylene homopolymer.

Therefore, a blown film comprising a polypropylene composition comprising component b.1a is preferred.

The polypropylene composition may be prepared by compounding the polypropylene homopolymer or the heterophasic propylene polymer with the polymeric nucleating agent. For example, the compounding can be carried out in an extruder.

### Component b.1a: Propylene homopolymer

The propylene homopolymer has from 0.0 to 0.2 wt.-%, based on the total weight of the polypropylene homopolymer, of ethylene as comonomer. The ethylene content is measured as disclosed in the "Measuring methods" section herein below.

The polypropylene composition comprising component b.1a, a polypropylene homopolymer, has a melt flow rate, MFR₂ in the range of from 1 to 20 g/10min, preferably in the range of from 1.5 to 15 g/10min, even more preferably in the range of from 5 to 1 g/10min. The MFR₂ is measured as disclosed in the "Measuring methods" section herein below.

The melting temperature Tm of the polypropylene composition comprising component b.1a is preferably in the range of from 150°C to 180°C, more preferably in the range of from 155°C to 175°C, and even more preferably in the range of from 160°C to 170°C. The Tm is measured as disclosed in the "Measuring methods" section herein below.

The crystallization temperature Tc of the polypropylene composition comprising component b.1a is preferably in the range of from 110°C to 150°C, more preferably in the range of from 120°C to 140°C, and even more preferably in the range of from 125°C to 130°C. The Tc is measured as disclosed in the "Measuring methods" section herein below.

The melt enthalpy Hm of the polypropylene composition comprising component b.1a is preferably in the range of from 70 to 150 J/g, more preferably of from 95 to 140 J/g, more preferably of from 100 to 120 J/g. The Hm is measured as disclosed in the "Measuring methods" section herein below.

Preferably, the polypropylene homopolymer has a pentad isotacticity (mmmm) in the range of from 90.0 to 99.0 %, more preferably of from 95.0 to 98.0 %, as measured by ¹³C NMR. The pentad isotacticity (mmmm) is measured as disclosed in the "Measuring methods" section herein below.

Preferably, the polypropylene homopolymer has a xylene cold solubles (XCS) in the range of from 0.5 to 4 wt.-%, more preferably of from 1.0 to 3.0 wt.-%. The XCS is measured as disclosed in the "Measuring methods" section herein below.

Preferably, the polypropylene homopolymer has a molecular weight distribution, MWD, in the range of from 5.5 to 20.0, more preferably in the range of from 7 to 15. The MWD is measured as disclosed in the "Measuring methods" section herein below.

Suitable methods to prepare the propylene homopolymer are disclosed in patent application WO2016/066446.

### Component b.1b: Heterophasic propylene polymer

Component b.1b is a heterophasic propylene polymer. It therefore comprises a matrix component selected from a propylene homo- or a random copolymer and an ethylene-propylene rubber (EPR) dispersed in the matrix. Preferably, the heterophasic propylene polymer has an ethylene-propylene-rubber (EPR) content in the range of from 5 to 40 wt.-%, more preferably of from 5.0 to 20 wt.-%, even more preferably of from 10 to 15 wt.-%.

The polypropylene composition comprising component b.1b has a melt flow rate MFR₂ in the range of from 0.1 to 20 g/10 min, preferably in the range of from 1.5 to 10 g/10 min. The MFR₂ is measured as disclosed in the "Measuring methods" section herein below.

The melting temperature Tm of the polypropylene composition comprising component b.1b is preferably in the range of from 150°C to 180°C, more preferably in the range of from 155°C to 180°C, and even more preferably in the range of from 160°C to 170°C. The Tm is measured as disclosed in the "Measuring methods" section herein below.

The crystallization temperature Tc of the polypropylene composition comprising component b.1b is preferably in the range of from 110°C to 150°C, more preferably in the range of from 120°C to 140°C, and even more preferably in the range of from 125°C to 135°C. The Tc is measured as disclosed in the "Measuring methods" section herein below.

The melt enthalpy Hm of the polypropylene composition comprising component b.1b is preferably in the range of from 70 to 150 J/g, more preferably of from 90 to 140 J/g, more preferably of from 95 to 105 J/g. The Hm is measured as disclosed in the "Measuring methods" section herein below.

The amount of ethylene units in XCS (C₂(XCS)) in the heterophasic propylene polymer is preferably, in the range of from 17 to 70 wt.-%, more preferably of from 20 to 50 wt.-%, even more preferably of from 25 to 40 wt.-%, based on the total weight of the heterophasic propylene polymer, of ethylene as comonomer. The C₂(XCS) is measured as disclosed in the "Measuring methods" section herein below.

The ethylene content in the heterophasic propylene polymer is preferably in the range of from 2 to 20 wt.-%, more preferably of from 3 to 10 wt.-%, based on the total weight of the heterophasic propylene polymer. The ethylene content is measured as disclosed in the "Measuring methods" section herein below.

Preferably, the heterophasic propylene polymer has a cold soluble fraction (XCS) in the range of from 2 to 40 wt.-%, more preferably of from 5.0 to 20 wt.-%. The XCS is measured as disclosed in the "Measuring methods" section herein below.

Preferably, intrinsic viscosity (IV) is in the range of from 1.0 to 5.5 dl/g, more preferably of from 1.2 to 4.5 dl/g and most preferably of from 1.5 to 2.5 dl/g. The intrinsic viscosity (IV) is measured as disclosed in the "Measuring methods" section herein below.

Suitable methods to prepare the heterophasic propylene polymer are disclosed in patent application EP3315551.

### Component b.2: Polymeric Nucleating Agent

A polymeric nucleating agent is a substance that is added to a polymer material to promote the formation of a crystalline structure during the polymer's cooling process.

The polypropylene composition comprises a polymeric nucleating agent preferably selected from vinylcycloalkane polymer, vinylalkane polymer or mixture thereof, such as poly(vinyl cyclohexane) (PVCH), poly(4-methyl pentene-1) (P4MP) and poly(tetrafluoro ethylene). Preferably the polymeric nucleating agent is poly(vinylcyclohexane) (PVCH).

It has been found that these agents comprised in a polypropylene composition and added to a polyethylene composition, helps the crystallization of the polyethylene composition as described herein during the cooling step of a blown film process, leading to improve optical and mechanical properties and without affecting the impact properties (such as the dart drop strength impact) that are affected when other nucleating agents are added to a polyethylene composition.

Polymeric nucleating agents can either be incorporated by in-reactor nucleation or by a compounding technology.

In a preferred embodiment of the present invention, the polymeric nucleating agent is introduced into the polypropylene homopolymer by means of a suitably modified catalyst, into the reactor (i.e., in-reactor nucleation) i.e. the catalyst to be used in catalysing the polymerization (for example of any of the polypropylene homopolymer or the ethylene-propylene rubber), is subjected to a polymerization of a suitable monomer for the polymeric nucleating agent to produce first said polymeric nucleating agent. The catalyst is then introduced together with the obtained polymeric nucleating agent to the actual polymerization step of the polypropylene composition.

Another embodiment, different to the above mentioned in-reactor blend, is a mechanical blend of the polypropylene component with the polymeric nucleating agent, wherein the polypropylene component is first produced in the absence of a polymeric nucleating agent and is then blended mechanically with the polymeric nucleating agent or with a small amount of nucleated polymer or with polymers, which already contain the polymeric nucleating agent in order to introduce the polymeric nucleating agent into the polypropylene component.

As outlined above, the reactor made polymer composition is a preferred embodiment of the present invention, although also mechanical blends are envisaged by the present invention.

The polypropylene composition comprises the polymeric nucleating agent preferably in an amount ranging from 1 ppm to 1000 ppm, more preferably from 5 ppm to 800 ppm, even more preferably from 10 ppm to 700 ppm. Suitable ranges may be, for example, from 1 ppm to 50 ppm, from 5 to 20 ppm.

Preferably, the polypropylene composition comprises PVCH as the polymeric nucleating agent. In this embodiment it is preferred that other polymeric nucleating agent(s), if present, is/are present in an amount lower than 100 ppm, based on the polypropylene composition, preferably lower than 50 ppm, based on the polypropylene composition. The amount of the other polymeric nucleating agent(s) is preferably lower than the amount of PVCH.

### Further nucleating agents

The polypropylene composition, preferably the heterophasic polypropylene composition, in addition to the polymeric nucleating agent b.2 as disclosed herein above may further comprise at least one further nucleating agent other than the polymeric nucleating agent.

This at least one further nucleating are (i) monocarboxylic acids and polycarboxylic acids or (ii) salts of diesters of phosphoric acid (iii), sorbitol derivatives and nonitol derivatives. Examples of the nucleating agents (i), (ii) and (iii) are provided herein below:
- (i) salts of monocarboxylic acids and polycarboxylic acids, e.g. sodium benzoate or aluminum tert-butylbenzoate; or 1,2-cyclohexane dicarboxylicacid Ca-salt, of which the 1,2-cyclohexane dicarboxylicacid Ca-salt is especially preferred;
- (ii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and hydroxybis (2,4,8,10-tetra-tert- butyl-6-hydroxy-12Hdibenzo(d,g)(1,3,2) dioxaphosphocin 6-oxidato) aluminium, wherein hydroxybis (2,4,8,10-tetra-tert- butyl-6-hydroxy-12H-dibenzo(d,g)(1,3,2) dioxaphosphocin 6-oxidato) aluminium is preferred,
- (iii) soluble nucleating agents, namely sorbitol derivatives, e.g. di(alkylbenzylidene)sorbitols as 1,3:2,4-25 dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, e.g. 1,2,3-trideoxy-4,6;5,7-bis-O-[(4-propylphenyl)methylene]nonitol.

The nucleating agents present in the heterophasic polypropylene composition are for PVCH and 1,2-cyclohexane dicarboxylicacid, Ca-salt. The nucleating agents present in the heterophasic polypropylene composition of the present invention for example consist of PVCH and 1,2-cyclohexane dicarboxylicacid, Ca-salt.

The further nucleating agent is present in the polypropylene composition in an amount up to 600ppm, preferably up to 500ppm.

Although the polypropylene composition may include additional, non-polymeric nucleating agents as disclosed herein, it is preferred that such agents are excluded. These non-polymeric nucleating agents may be present in the polyethylene compositions only because they were used during the preparation of the propylene homopolymer or heterophasic polypropylene.

The polypropylene composition may further comprise conventional additives used in the preparation of polypropylene, such as antioxidants, stabilisers, acid scavengers, UV stabilisers, lubricants, and antistatic agents. These additives are typically used in the production of both propylene homopolymers and heterophasic polypropylene. Their total amount is usually 10 wt.% or less, preferably 5 wt.% or less of the polypropylene composition.

### Blown film

The present invention is related to a blown film comprising the polyethylene composition as described above or below.

The blown film preferably comprises at least 70 wt.-%, preferably comprises at least 80 wt.-%, more preferably comprises at least 90 wt.-%, still more preferably comprises at least 95 wt.-%, yet more preferably comprises at least 99 wt.-%, of the polyethylene composition. The film preferably comprises of from 70 to 99.99 wt.-% of the polyethylene composition, more preferably of from 80 to 99.95 wt.-%, even more preferably of from 90 to 99.8 wt.-%, still more preferably of from 95 to 99.5 wt.-%, most preferably of from 99 to 99.5 wt.-%. The wt.-% are based on the total weight of the blown film. The blown film may consist entirely of the polyethylene composition as described above.

The blown film may comprise additives that are typical additives added to a blown film also depending on the final intended use. This aspect is known to the skilled person.

Typical additives are acid scavengers, antioxidants, colorants, light stabilizers, plasticizers, slip agents, anti-scratch agents, dispersing agents, processing aids, lubricants, pigments, inorganic fillers and the like. The total content of such additives in the film shall not exceed 3.0 wt.-%, preferably being less than 2.0 wt.-%, like less than 1.0 wt.-%. Such additives are commercially available and for example described in "Plastic Additives Handbook", 6thedition 2009 of Hans Zweifel (pages 1141 to 1190).

The polypropylene composition component b) as disclosed herein above and the polymeric nucleating agent comprised in the polypropylene composition are not regarded to be "additives" in the context of the present invention.

The additives may be incorporated into the polyethylene composition as described, for example, during the compounding of HDPE with the polypropylene composition. In this case, the additives are considered part of the polyethylene composition. Alternatively, the additives may be introduced during the blowing process. In this case the additives amount is counted in addition to the amount of the polyethylene composition. It is also possible to add a portion of the additives to the polyethylene composition, while the remainder is added during the blowing process. This aspect is well known by the skilled person in the art.

Other components of a blown film may be mixed with the polyethylene composition as defined herein to sum up to the 100 wt.-% of the total weight of the blown composition. For example, the blown film can comprise in addition to the polyethylene composition as disclosed herein other polyethylenes such Low-Density Polyethylene (LDPE) and Linear Low-Density Polyethylene (LLDPE).

Preferably, the blown film has a thickness of 5 to 2.000 µm, preferably of 10 to 1.000 µm, more preferably of 15 to 700 µm, like of 20 to 500 µm.

The blown film according to the present invention has a good balance of properties as regards mechanical properties, including impact properties, optical properties and other film properties. It has been found that by adding a polymeric nucleating agent some blown film properties such clarity can be improved without sacrificing other properties such as the impact properties.

The blown film preferably has a clarity in the range of from 30 to 60 %, preferably in the range of from 35 to 50 %. The clarity is measured according to ASTM D1003.

The film preferably has a dart-drop impact strength (DDI) in the range of from 50 to 100 g, and more preferably in the range of from 70 to 90 g. The DDI is measured according to ISO 7765-1:1988 / Method A.

The film preferably has a dart drop impact retention (DDI retention) greater than 90 %, more preferably greater than 95 %, more preferably greater than 99 %, more preferably greater than 100 %. The DDI retention is preferably up to 120 %. The DDI retention is defined as ${DDI}_{retention} = 100 \times \frac{DDI \left(NU\right)}{DDI \left(reference\right)}$ wherein DDI(NU) is the dart drop impact of the blown film of the invention and DDI (reference) is the dart drop impact of the corresponding blown film without nucleating agent. Accordingly, a DDI retention below 100 % means that the dart drop impact of the blown film is lower than the dart drop impact of the corresponding blown film without nucleating agent. A DDI retention above 100 % means that the dart drop impact of the blown film is greater than the dart drop impact of the corresponding blown film without nucleating agent. The present invention achieves a dart drop retention greater than 90%. This means that the polymeric nucleating agent does not significantly affect the DDI of the blown film, in contrast to the prior art nucleating agents that show a DDI retention below 90 %. As shown in the present examples, the blown films of the invention achieve a DDI retention even greater than 100 % meaning that the polymeric nucleating agent increases the DDI of the blown film.

The blown film preferably has a tensile modulus in machine direction (TM-MD) in the range of from 700 to 1300 MPa, preferably of from 800 to 1200 MPa, more preferably of from 900 to 1100 MPa. The TM-MD is measured according to ISO 527-3 at 23°C.

The blown film further preferably has a tensile modulus in transverse direction TM-TD in the range of from 900 to 1500 MPa, preferably of from 1000 to 1400 MPa, more preferably of from 1100 to 1300 MPa. The TM-TD is measured according to ISO 527-3 at 23°C.

The blown film is preferably a monolayer film or at least one layer of a multilayer film. Should the blown film be at least one layer of a multilayer film, it is preferred that the blown film is the skin layer of the multilayer film. The skin layer is the outermost layer of the multilayer film that is exposed to the environment.

### Process for preparing the blown film

In an aspect the present invention is directed to a process for preparing the blown film. Any known process for preparing the blown film is suitable according to the present invention. In the process of the invention, the polyethylene composition disclosed above is provided and the blown film is extruded to provide the blown film of the invention.

The polyethylene composition is prepared by compounding, preferably in an extruder, the component a) HDPE and the component b) the polypropylene composition and optionally the additives and the other components such as LPDE and/or LLDPE. The nucleation and crystallization of the polyethylene composition occur during the cooling phase of the blowing extrusion process.

Preferably, the blown film extrusion is carried out at a temperature in the range of from 180 to 250°C, more preferably the blown film extrusion is carried out at a temperature in the range of from 200 to 220°C.

Preferably the blown film extrusion is carried out at a die pressure in the range of from 20 to 25 MPa (200 to 250 bar), more preferably the extrusion is carried out at a die pressure in the range of from 22 to 24 MPa (220 to 240 bar). It has been observed that advantageously the die pressure in the blown film extrusion for preparing the blown film of the invention is lower than the die pressure of the blown film extrusion carried out at the same conditions with the polyethylene composition without component b).

### Use of the blown film

In addition, the present invention is related to articles comprising a blown film of the invention and to the use of the blown film of the invention to prepare the articles. Typical articles prepared with blown films are industry packaging, consumer packaging, bags and sacks, lamination films, barrier films, packaging of food or medical products, agriculture films, hygienic products and products for packaging in general.

### Examples

The invention will now be described with reference to the following non-limiting examples.

### Measuring methods

The following definitions of terms and determination methods apply for the above general description of the invention as well as to the below examples unless otherwise defined.

### (a) Melt flow rate (MFR)

The melt flow rate was measured as the MFR₂ in accordance with ISO 1 133, 230°C, 2.16 kg load for polypropylene and 190 °C kg load for polyethylene. The MFR₂ is an indication of the flowability, and hence the processability, of the polymer. The higher the melt flow rate, the lower the viscosity of the polymer. MFR₂₁ was measured in accordance with ISO 1 133, 230°C, 21.6 kg load.

Th MFR₂ of the first fraction first fraction (Fraction (A)) and of the second fraction (Fraction (B)) were calculated as follows: $logA = x ⋅ logB + \left(1-x\right) ⋅ logC$ $C = {{10}^{∧}}^{\frac{\left(logA-x.logB\right)}{\left(1-x\right)}}$
B = MFR₂ of Fraction (A)
C = MFR₂ of Fraction (B)
A = final MFR₂ (mixture) of multimodal polyethylene copolymer (P)
X = weight fraction of Fraction (A)
Fraction (A) is the fraction produced first.

### Flow Rate Ratio (FRR_{21/2}))

FRR**_{21/2}** was determined as the ratio between the MFR₂₁ and the MFR₂.

### (b) Density

The density was measured according to ISO 1183 and ISO1872-2 was applied for sample preparation.

To calculation of density for the second fraction are done as following: ${Density}_{\left(second fraction\right)} = \left({Density}_{\left(total\right)}-\left(x/100\right)*{density}_{\left(first fraction\right)}\right) / \left(1-x/100\right)$ x is the weight fraction of first fraction.

### (c) Number average molecular weight (Mn), weight average molecular weight (Mw) and polydispersity (Mw/Mn)

The measurements were conducted by gel permeation chromatography (GPC). The weight average molecular weight Mw and the polydispersity (Mw/Mn), wherein Mn is the number average molecular weight and Mw is the weight average molecular weight) were measured by a method based on ISO 16014-1 :2003 and ISO 16014-4:2003.

A Waters Alliance GPCV 2000 instrument, equipped with refractive index detector and online viscosimeter was used with 3 x TSK-gel columns (GMFIXL-FIT) from TosoFlaas and 1 ,2,4-trichlorobenzene (TCB, stabilized with 200 mg/L 2,6-Di tert butyl-4-methylphenol) as solvent at 145°C and at a constant flow rate of 1 ml/min. 216.5 pi of a sample solution were injected per analysis. The column set was calibrated using relative calibration with 19 narrow MWD polystyrene (PS) standards in the range of from 0.5 kg/mol to 11500 kg/mol and a set of well characterized broad polypropylene standards.

All samples were prepared by dissolving 5-10 mg of polymer in 10 ml (at 160°C) of stabilized TCB (same as mobile phase) and keeping for 3 hours with continuous shaking prior sampling in into the GPC instrument.

### (d) Quantification of microstructure by NMR spectroscopy and of the isotactic pentad (mmmm)

Quantitative nuclear-magnetic resonance (NMR) spectroscopy was used to quantify the isotacticity and regio-regularity of the polymers and the comonomer fraction.

Quantitative 13 C{1 H} NMR spectra were recorded in the solution-state using a Bruker Advance III 400 NMR spectrometer operating at 400.15 and 100.62 MHz for 1 H and 13 C respectively. All spectra were recorded using a 13 C optimised 10 mm extended temperature probehead at 125° C. using nitrogen gas for all pneumatics.

For polymers approximately 200 mg of material was dissolved in 1,2-tetrachloroethane-d2 (TCE-d2). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A. L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8 k) transients were acquired per spectra. Quantitative 13 C{1 H} NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A. L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences: [mmmm] %=100*(mmmm/sum of all pentads) The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm: ${P}_{21 e} = \left({I}_{e 6}+{I}_{e 8}\right) / 2$

The amount of 1,2 primary inserted propylene was quantified based on the methyl region with correction undertaken for sites included in this region not related to primary insertion and for primary insertion sites excluded from this region: ${P}_{12} = {I}_{CH 3} + {P}_{21 e}$

The total amount of propylene was quantified as the sum of primary inserted propylene and all other present regio-defects: ${P}_{total} = {P}_{12} + {P}_{21 e}$

The mole percent of 2,1 erythro regio-defects was quantified with respect to all propylene: $\left[21e\right] mol - % = 100 * \left({P}_{21 e}/{P}_{total}\right)$

The comonomer fraction was quantified using the method of Wang et. al. (Wang, W-J., Zhu, S., Macromolecules 33 (2000), 1157) through integration of multiple signals across the whole spectral region in the 13 C{1 H} spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to: $E = 0.5 \left(Sββ+Sβγ+Sβα+0.5\left(Sαβ+Sαγ\right)\right)$

Through the use of this set of sites the corresponding integral equation becomes: $E = 0.5 \left({I}_{H}+{I}_{G}+0.5\left({I}_{C}+{I}_{D}\right)\right)$ using the same notation used in the article of Wang et. al. (Wang, W-T, Zhu, S., Macromolecules 33 (2000), 1157). Equations used for absolute propylene content were not modified.

The mole percent comonomer incorporation was calculated from the mole fraction: $E \left[mol%\right] = 100 * fE$

The weight percent comonomer incorporation was calculated from the mole fraction: $E \left[wt.-%\right] = 100 * \left(IE*28.06\right) / \left(\left(IE*28.06\right)+\left(\left(1-IE\right)*42.08\right)\right)$

The comonomer sequence distribution at the triad level was determined using the analysis method of Kakugo et al. (Kakugo, M., Naito, Y, Mizunuma, K., Miyatake, T. Macromolecules 15 (1982) 1150). This method was chosen for its robust nature and integration regions slightly adjusted to increase applicability to a wider range of comonomer contents.

The relative content of isolated to block ethylene incorporation was calculated from the triad sequence distribution using the following relationship (equation (II)): $I \left(E\right) = \frac{{f}^{PEP}}{\left({f}^{EEE +}{f}^{PEE +}{f}^{PEP}\right)} \times 100$ (II) wherein
∘ I(E) is the relative content of isolated to block ethylene sequences [in %];
∘ fPEP is the mol fraction of propylene/ethylene/propylene sequences (PEP) in the sample;
∘ fPEE is the mol fraction of propylene/ethylene/ethylene sequences (PEE) and of ethylene/ethylene/propylene sequences (EEP) in the sample;
∘ fEEE is the mol fraction of ethylene/ethylene/ethylene sequences (EEE) in the sample Calculation of comonomer content of the second propylene-ethylene random copolymer fraction (R-PP2): $\frac{C \left(PP\right) - w \left(PP1\right) xC \left(PP1\right)}{w \left(PP2\right)} = C \left(PP2\right)$ (V)
wherein
∘ w(PP1) is the weight fraction [in wt.-%] of the first propylene-ethylene random copolymer fraction (R-PP1),
∘ w(PP2) is the weight fraction [in wt.-%] of second propylene-ethylene random copolymer fraction (R-PP2),
∘ C(PP1) is the comonomer content [in mol-%] of the first propylene-ethylene random copolymer fraction (R-PP1),
∘ C(PP) is the comonomer content [in mol-%] of the monophasic propylene-ethylene random copolymer composition (R-PP),
∘ C(PP2) is the calculated comonomer content [in mol-%] of the second propylene-ethylene random copolymer fraction (R-PP2).

### (e) The xylene solubles (XCS, wt.-%):

Content of xylene cold solubles (XCS) was determined at 25°C according ISO 16152; 2005.

### (f) Intrinsic viscosity (IV of XCS)

Intrinisic viscosity (IV of XCS) is measured according to DIN ISO 1628/1, October 1999 (in Decalin at 135 °C) on the xylene soluble fraction (XCS).

(g) DSC analysis, melting temperature (Tm), melting enthalpy (Hm) and crystallization temperature (Tc): these parameters were measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C.

Crystallization temperature (Tc) was determined from the cooling step, while melting temperature (Tm) and melting enthalpy (Hm) are determined from the second heating step.

**(h) Tensile modulus in machine and transverse direction** were determined according to ISO 527-3 at 23°C.

**(i) Haze and clarity** were determined according to ASTM D1003-00.

### (j) Dart-drop impact strength (DDI):

Dart-drop was measured using ISO 7765-1:1988 / Method A from the blown films of 40 µm thickness.

Standard conditions:
Conditioning time: > 96 h
Test temperature: 23°C
Dart head material: phenolic
Dart diameter: 38 mm
Drop height: 660 mm

The weight resulting in failure of 50 % of the specimens is calculated and reported. The dart drop impact (DDI)ᵣₑₜₑₙₜᵢₒₙ is calculated according to the formula. ${DDI}_{retention} = 100 % x \frac{DDI \left(NU\right)}{DDI \left(reference\right)}$
DDI(NU) is DDI of the film with nucleating agent.
DDI(reference) is DDI of the film without nucleating agent.

### Materials

**HDPE:** the bimodal HDPE was produced with a ZN catalyst (as disclosed in EP 2994506), in a pilot plant, with a configuration of prepolymerisation- loop - gas phase reactor, having a MFR₂ of 0.8 g/10 min, a density of 955.5 kg/m³. The produced HDPE was pelletized with 500 ppm Irganox 1010 (supplied by BASF), 2000 ppm Irgafos 168 (supplied by BASF), 500 ppm Calcium stearate (CEASIT FI, supplied by Baerlocher) on a twin screw extruder. The production details are summarized in Table 1 below.

**Table 1**

| | HDPE |
|---|---|
| **Prepoly** | |
| Temp. (°C) | 70 |
| Press. (bar) | 57 |
| H₂ (g/h) | 5.0 |

| **Loop reactor** | |
|---|---|
| Temp. (°C) | 95 |
| Press. (bar) | 55 |
| C2 conc. (mol-%) | 3.5 |
| H₂/C2 (mol/kmol) | 430 |
| Density (kg/m³) | 970 |
| split % | 49.0 |
| MFR₂ (g/10 min) | 350 |

| **GPR** | |
|---|---|
| Temp. (°C) | 85 |
| Press. (bar) | 20 |
| H2/C2 (mol/kmol) | 110 |
| C4/C2 (mol/kmol) | 25.0 |
| split % | 51.0 |
| Density (kg/m³) | 955.5 |
| MFR₂ (g/10 min) | 0.80 |

| **Pellet** | |
|---|---|
| Density (kg/m³) | 955.5 |
| MFR₂ (g/10 min) | 0.8 |
| MFR₂₁ (g/10 min) | 47.4 |
| MFR₂₁/MFR₂ | 59.2 |
| MFR in GPR | 0.002 |
| Density in GPR | 941.6 |

### Polypropylene homopolymer (PPH-1):

PPH-1 was polymerized using the Ziegler-Natta catalyst as used in the inventive examples of WO2016/066446 (i.e. with VCH prepolymerization). PPH-1 was produced in a Borstar pilot plant, with prepolymerizer-loop configuration, under the following polymerization conditions: loop temperature 75 °C, pressure 35 bar, TEAL 150 g/t C3, Donor D 20g/t C3. Hydrogen was used to adjust MFR to 6.5 g/10min, the typical condition H2/C3 1.5 mol/kmol. The obtained powder was compounded with commercial stabilizers (330 ppm of Irganox 1010, 667 ppm of Irgafos 168, and 400 ppm of calcium stearate) and then extruded to pellets in a ZSK 18 counter-rotating twin screw extruder (manufactured by Coperion GmbH, DE) having a melt temperature of 210 °C and a throughput of 7 kg/h. The final product contained 15 ppm of PVCH.

### Heterophasic polypropylene (HECO-1):

The polymerization of HECO-1 was carried out according to IE4 in table 1 of EP 3 315 551 . The polymeric nucleating agent pVCH was introduced into the HECO-1 by means of the modified catalyst as disclosed in EP 3 315 551 's paragraph "1b) VCH modification of the catalyst". The powder produced from the reactor is mixed with 500 ppm of HPN20E, 400 ppm of SHT, 330 ppm of Irganox 1010 and 667 ppm of Irgafos 168, then extruded to pellets in a ZSK 18 counter-rotating twin screw extruder (manufactured by Coperion GmbH, DE) having a melt temperature of 210°C and a throughput of 7 kg/h. The final product contained 15 ppm of PVCH.

**HPN20E:** 34 % Zinc Stearate+66 % 1,2-Cyclohexanedicarboxylic Acid, Calcium salt, a nucleating agent from Milliken.

**Examples IE1, IE2 and comparative examples CE1 and CE2:** HDPE and the respective nucleating agents were compounded on a ZSK 18 twin screw extruder. The quantities are disclosed in Table 1. The film extrusion was carried out on a Collin 30 blown film line with BUR 1:2.5, to produce a blown film having thickness of 40 µm. The blown film properties are also disclosed in Table 1.

**Table 1**

| | | CE1 | IE1 | IE2 | CE2 |
|---|---|---|---|---|---|
| HDPE | wt.-% | 100 | 95 | 95 | 99.9 |
| PPH-1 | wt.-% | | 5 | | |
| HECO-1 | wt.-% | | | 5 | |
| HPN20E | wt.-% | | | | 0.1 |
| | | | | | |
| MFR₂ | g/10min | 0.7 | 0.8 | 0.75 | 0.72 |
| Melt temperature | °C | 214 | 214 | 215 | 215 |
| Die pressure | bar | 230 | 216 | 225 | 233 |
| TM/MD | MPa | 955 | 1018 | 982 | 974 |
| TM/TD | MPa | 1116 | 1238 | 1172 | 1176 |
| clarity | % | 28.5 | 39 | 47 | 32 |
| DDI | g | 84 | 85 | 87 | 71 |
| DDI Retention | % | - | 101 | 104 | 85 |

During the blow film extrusion process the Inventive examples IE1 and IE2 show a much lower die pressure under the same production conditions of the comparative examples. This results in a more efficient process with a reduced energy consumption. The lower pression improves the flow of the polymer through the die which can result in more uniform thickness and few process issues like blocking and surging.

The polymeric nucleating agent of the invention does not alter the DDI which remains similar to corresponding HDPE composition without nucleating agent (CE1). By contrast with the comparative nucleating agent (CE2) a drop of the DDI is observed. In the inventive examples IE1 and IE2 a significative improvement of the clarity is also observed. Therefore, the blown film of the present invention has improved optical and mechanical properties.

## Claims

1. A blown film comprising
a polyethylene composition comprising
a) at least 90 wt.-%, based on the total weight of the polyethylene composition, of a high-density polyethylene (HDPE) having
a.1 a density ranging from 945 kg/m³ to 970 kg/m³ determined according to ISO 1183;
a.2 an MFR₂ ranging from 0.05 to 5.0 g/10min determined according to ISO 1 133190°C under a load of 2.16 kg and
b) from 1 to 10 wt.-%, based on the polyethylene composition, of a polypropylene composition comprising
b.1 up to 99.9999 wt.-%, based on the total weight of the polypropylene composition, of a polypropylene wherein the polypropylene is
b.1a a propylene homopolymer having from 0.0 to 0.2 wt.-%, based on the total weight of the propylene homopolymer, of ethylene as comonomer or
b.1b a heterophasic polypropylene, and
b.2 a polymeric nucleating agent.

2. The blown film according to claim 1, wherein the HDPE has a MFR₂ of 0.3 to 4.0 g/10 min determined according to ISO 1 133.

3. The blown film according to any of the preceding claims, wherein the HDPE is multimodal, preferably bimodal.

4. The blown film according to any of the preceding claims, wherein the HDPE comprises a lower molecular weight (LMW) ethylene homopolymer or copolymer fraction and a higher molecular weight (HMW) ethylene copolymer fraction, preferably wherein said HMW ethylene copolymer fraction comprises at least one C₃-C₁₂ alpha olefin, preferably but-1-ene, hex-1-ene or oct-1-ene as comonomer.

5. The blown film according to claim 5, wherein the HDPE comprises from 48 to 55 wt.-% of the HMW component and 52 to 45 wt.-% of the LMW component, based on the total weight of HDPE.

6. The blown film according to any of the preceding claims, wherein the polypropylene composition b) comprises from 1 to 1000 ppm of component b.2) polymeric nucleating agent and optionally up to 600 ppm of a non-polymeric nucleating agent.

7. The blown film according to any of the preceding claims, wherein the polypropylene composition has one or more or all of:
- a MFR₂ in the range of from 0.1 to 20 g/10min determined according to ISO 1 133;
- a melting temperature Tm in the range of from 150 to 180°C determined by differential scanning calorimetry
- a crystallization temperature in the range of from 120 to 140 °C determined by differential scanning calorimetry.

8. The blown film according to any of the preceding claims, wherein the polymeric nucleating agent is selected from vinylcycloalkane polymer, vinylalkane polymer or mixture thereof, preferably the polymeric nucleating agent is poly(vinylcyclohexane) and wherein more preferably the polymeric nucleating agent is poly(vinylcyclohexane and the other polymeric nucleating agent(s), if present, is/are present in an amount lower than 100 ppm.

9. The blown film according to any of the preceding claims, wherein the blown film comprises at least 70 wt.-%, preferably comprises at least 80 wt.-%, more preferably comprises at least 90 wt.-%, still more preferably comprises at least 95 wt.-%, most preferably comprises at least 99 wt.-%, of the polyethylene composition, based on the blown film weight, or wherein the blown film consists of the polyethylene composition.

10. The blown film according to any of the preceding claims, wherein the blown film is a monolayer film or at least one layer of a multilayer film, preferably the skin layer.

11. The blown film according to any of the preceding claims, wherein the blown film has:
- a dart drop impact retention (DDI retention) greater than 90%, preferably greater than 99% more preferably greater than 100% wherein the DDI retention defined as ${DDI}_{retention} = 100 \times \frac{DDI \left(NU\right)}{DDI \left(reference\right)}$ wherein DDI(NU) is the dart drop impact of the blown film and DDI (reference) is the dart drop impact of the corresponding blown film without nucleating agent; and/or
- a clarity, determined according to ASTM D1003-00, in the range of from 30 to 60 %, preferably in the range of from 35 to 50%.
and optionally
- a dart-drop impact strength (DDI), determined according to ISO 7765-1:1988 / Method A , in the range of from 50 g to 100 g, more preferably in the range of from 70 g to 90 g; and/or
- a tensile modulus in machine direction, determined according to ISO 527 at 23°C, in the range of from 700 to 1300 MPa, preferably of from 800 to MPa to 1200 MPa, more preferably of from 900 to 1100 MPa; and/or
- a tensile modulus in transverse direction, determined according to ISO 527 at 23°C, in the range of from 900 to 1500 MPa, preferably of from 1000 MPa to 1400 MPa, more preferably of from 1100 to 1300 MPa.

12. Process for preparing a blown film, the process comprising
i) providing the polyethylene composition as defined in any of claims 1 to 8; and
ii) blown film extruding the composition of i).

13. The process according to claim 12, wherein nucleation occurs during the cooling phase of the blown film extruding according to step ii).

14. Polyethylene composition comprising
a) at least 90 wt.-%, based on the total weight of the composition, of a high-density polyethylene (HDPE) having
a.1 a density ranging from 945 kg/m³ to 970 kg/m³ determined according to ISO 1183
a.2 an MFR₂ ranging from 0.05 to 5.0 g/10min (190°C under a load of 2.16 kg determined according to ISO 1 133) and
b) from 1 to 10 wt.-%, based on the polyethylene composition, of a polypropylene composition comprising
b.1 up to 99.9999 wt.-%, based on the total weight of the polypropylene composition, of a polypropylene wherein the polypropylene is
b.1a a propylene homopolymer having from 0.0 to 0.2 wt.-%, based on the total weight of the propylene homopolymer of ethylene as comonomer or
b.1b a heterophasic polypropylene, and
b.2 a polymeric nucleating agent.

15. Use of the blown film according to claims 1 to 11 for packaging, preferably food packaging.
